# EUROPEAN PATENT APPLICATION

(11) **EP 3 978 562 A1**
(43) Date of publication of application: **06.04.2022**
(21) Application number: 21200995.5
(22) Date of filing: 05.10.2021
(51) Int. Cl.: C08L 1/02

(54) **METHOD FOR MANUFACTURING INJECTION MOLDING MATERIAL AND INJECTION MOLDING MATERIAL**

(30) Priority: 05.10.2020 JP 2020168312
(71) Applicant: Seiko Epson Corporation, Tokyo 160-8801 (JP)
(72) Inventor: YOSHIOKA, Satomi, Suwa-shi, 392-8502 (JP); ITO, Akio, Suwa-shi, 392-8502 (JP)
(74) Representative: Miller Sturt Kenyon

(57) **Abstract**

A method for manufacturing an injection molding material includes a mixing step of mixing in a gas atmosphere, a fiberized cellulose; a hydrophobic biodegradable material; and a starch.

## Description

The present application is based on, and claims priority from JP Application Serial Number 2020-168312, filed October 5, 2020, the disclosure of which is hereby incorporated by reference herein in its entirety.

### BACKGROUND

### 1. Technical Field

The present disclosure relates to a method for manufacturing an injection molding material and an injection molding material.

### 2. Related Art

As a method for manufacturing a molded product, such as paper, a paper plate, or a paper-based board, containing cellulose fibers, a so-called dry method in which water is not or hardly used has been expected. In general, when a paper product is formed, a large amount of water is used, and hence, for example, in order to reduce the amount of water to be used, various developments have been carried out.

For example, JP-A-2002-309095 has disclosed a molding material which contains plant-derived fibers, a binder (such as a starch), water, and a metal soap and, in order to reduce a moisture amount contained in the material, which also contains a fluidity imparting material (such as glycerin) instead of water to impart fluidity to the material.

However, a molded product formed from the molding material disclosed in JP-A-2002-309095 may have an insufficient water resistance in some cases.

### SUMMARY

According to an aspect of the present disclosure, there is provided a method for manufacturing an injection molding material, the method comprising: a mixing step of mixing in a gas atmosphere, a fiberized cellulose; a hydrophobic biodegradable material; and a starch.

According to another aspect of the present disclosure, there is provided an injection molding material comprising: a fiberized cellulose; a hydrophobic biodegradable material in the form of fibrous and/or powdery particles; and a starch in the form of powdery particles, and in an aggregate of the fiberized cellulose, the hydrophobic biodegradable material and the starch are uniformly distributed.

### BRIEF DESCRIPTION OF THE DRAWINGS

FIGURE is a schematic view of a manufacturing apparatus according to an embodiment.

### DESCRIPTION OF EXEMPLARY EMBODIMENTS

Hereinafter, embodiments of the present disclosure will be described. The following embodiments are each described as one example of the present disclosure. The present disclosure is not limited to the following embodiments and includes various modified embodiments to be performed without departing from the scope of the present disclosure. In addition, all components to be described below are not always required to be essential components.

### 1. Method for Manufacturing Injection Molding Material

A method for manufacturing an injection molding material according to this embodiment includes a mixing step of mixing a fiberized cellulose, a hydrophobic biodegradable material, and a starch in a gas atmosphere. Hereinafter, the raw materials and the step will be described in this order.

### 1.1. Fiberized Cellulose

An injection molding material of this embodiment includes a fiberized cellulose. The fiberized cellulose is one component of a molded product manufactured using the injection molding material and not only contributes to retention of the shape of the molded product but also maintains and improves the characteristics, such as a strength, of the molded product.

In this specification, the "fiberized cellulose" indicates a fibrous cellulose which is obtained by defibrating a cellulose raw material, such as pulp or paper, containing cellulose. The fiberized cellulose may indicate one cellulose fiber or an aggregate (such as a cotton state) of cellulose fibers.

Although the fiberization of the cellulose raw material can be performed, for example, by a mechanical treatment, a chemical treatment, a disaggregating treatment, or a combination therebetween, the cellulose raw material is more preferably defibrated by a dry method. By the fiberization, the cellulose (hereinafter, referred to as "cellulose fibers" in some cases) in the cellulose raw material is disentangled into fibers.

As the cellulose raw material, for example, there may be used pulp (a sheet or a veil of a broadleaf tree, a coniferous tree, a kenaf, a bagasse, a kapok, or the like); paper (such as copy paper, printing paper, cardboard, or recycled paper), waste paper, tissue paper, kitchen paper, a cleaner, a filter, a liquid absorber, an acoustic absorber, a buffer material, a mat, a corrugate board, or the like. The cellulose fibers in the cellulose raw material may be entangled or bonded to each other. In addition, as the cellulose raw material, a molded product manufactured using the injection molding material of this embodiment may also be used. Furthermore, the cellulose raw material is more preferably derived from natural or biomass materials. In addition, as the cellulose, a material processed by bleaching or the like may also be used.

Since being an abundant plant-derived natural material, the cellulose is able to more properly correspond to environmental problems, saving of underground resources, and the like, and in addition, an injection molding material formed from the cellulose and a molded product manufactured from the injection molding material are preferable in terms of stable supply, cost reduction, and the like. In addition, since having a particularly high theoretical strength among various types of fibers, the cellulose has also an advantage in terms of further improvement in strength of the molded product. Furthermore, the cellulose has a preferable biodegradable property.

Although not particularly limited, an average length of the fiberized cellulose fibers is preferably 0.1 to 50.0 mm, more preferably 0.2 to 5.0 mm, further preferably 0.3 to 3.0 mm. The lengths of the fiberized cellulose fibers may have a variation (distribution).

Accordingly, the shape stability, the strength, and the like of the molded product manufactured using the injection molding material can be further improved.

Although not particularly limited, an average thickness of the fiberized cellulose fibers is preferably 0.005 to 0.5 mm and more preferably 0.010 to 0.05 mm. The thickness of the fiberized cellulose fibers may have a variation (distribution).

Accordingly, the shape stability, the strength, and the like of the molded product manufactured using the injection molding material can be further improved. In addition, the surface of the molded product manufactured using the injection molding material can be further suppressed from being formed to have irregularity.

An average aspect ratio of the fiberized cellulose fibers, that is, a ratio of the average length to the average thickness, is not particularly limited, and the aspect ratio described above is preferably 10 to 1,000 and more preferably 15 to 500.

Accordingly, the shape stability, the strength, and the like of the molded product manufactured using the injection molding material can be further improved. In addition, the surface of the molded product manufactured using the injection molding material can be further suppressed from being formed to have irregularity.

The fiberized cellulose has hydroxy groups, and hydrogen bonds are likely to be formed between the fiberized cellulose and a starch which will be described later; hence, a bonding strength between the fiberized cellulose and the starch and a strength of the entire molded product manufactured using the injection molding material, such as a specific tensile strength of a sheet-shaped molded product, can be further improved.

Although a content of the fiberized cellulose in the injection molding material is not particularly limited, for example, the content described above is preferably 20.0 to 99.0 percent by mass, more preferably 25.0 to 98.0 percent by mass, and further preferably 28.0 to 97.0 percent by mass. The content of the fiberized cellulose in the injection molding material may be adjusted by a mixing amount in the mixing step which will be described later.

Accordingly, the shape stability, the strength, and the like of the molded product manufactured using the injection molding material can be further improved. In addition, the moldability in the manufacturing of the molded product can be further improved, and the productivity of the molded product can also be advantageously improved.

### 1.2. Hydrophobic Biodegradable Material

The injection molding material of this embodiment contains a hydrophobic biodegradable material. In the molded product manufactured using the injection molding material, the hydrophobic biodegradable material has a function as a binding material to bind the fiberized cellulose fibers to each other. In addition, the hydrophobic biodegradable material also has a function to impart a water resistance to the molded product formed using the injection molding material.

As the hydrophobic biodegradable material, a material having a hydrophobic property and a biodegradable property may be used. As an example of the hydrophobic biodegradable material, for example, there may be mentioned a PLA, a PHB, a PCL, a PBS, a PHBH, a PBAC, a PBAT, a plant-derived PBS, a cellulose acetate, a rosin, a dammar, a mastic, a copal, an amber, a shellac, a dragon's blood, a sandarac, a colophonium, a carnauba wax, a sugarcane wax, or a konjac powder. Those mentioned above may be used alone, or at least two types thereof may be used in combination, and those mentioned above may also be appropriately modified. In addition, in this specification, the cellulose acetate is not included in the fiberized cellulose described above.

As a preferable example of the hydrophobic biodegradable material, there may be mentioned a PLA, a PHB, a PCL, a PBS, a PHBH, a PBAC, a PBAT, a plant-derived PBS, a cellulose acetate, a shellac, a rosin, a carnauba wax, a sugarcane wax, or a konjac powder. In addition, among those mentioned above, a PLA, a PHB, a PCL, a PBS, a PHBH, a PBAC, a PBAT, and a plant-derived PBS each have an ester structure and may have either a copolymer structure or a structure formed by transesterification. Hereinafter, the above abbreviations will be described.
PLA: poly(lactic acid) (available from Boehringer Ingelheim GmbH, Echochem, Shimadzu Corporation, Cargill Inc., or the like)
PHB: poly(hydroxybutyrate) (P3HB, poly-3-hydroxybutyrate)
PCL: polycaprolactone (poly-e-caprolactone) (available from Daicel Corporation, Solvay Group, or the like)
PBS: poly(butylenesuccinate)
PHBH: hydroxybutyric acid-hydroxyhexanoic acid copolymer (poly(3HB-co-3HHx)
PBAC: poly(butylene adipate caprolactam) (available from Bayer AG or the like)
PBAT: poly(butylene adipate terephthalate) (available from BASF or the like)

As long as uniformly dispersed in the aggregate of the fiberized cellulose, the hydrophobic biodegradable material may be formed of arbitrarily shaped particles. As the arbitrarily shaped particles of the hydrophobic biodegradable material, for example, the particle may have a spherical shape, a disc shape, a fiber shape, an indefinite shape, or the like as the external shape. In addition, since a uniform distribution is likely to be obtained in the aggregate of the cellulose, the hydrophobic biodegradable material is preferably in the form of fibrous or powdery particles. In addition, the hydrophobic biodegradable material may be in the form of fibrous and/or powdery particles.

When the hydrophobic biodegradable material is in the form of fibrous and/or powdery particles, the hydrophobic biodegradable material can be further uniformly distributed with respect to the cellulose, and hence, the water resistance of the molded product can be further enhanced. In addition, accordingly, an injection molding material more suitable for the injection molding can be formed.

When the hydrophobic biodegradable material is in the form of fibrous particles, the fiber diameter thereof is preferably 0.1 to 500.0 µm, more preferably 1.0 to 300.0 µm, and further preferably 5.0 to 100.0 µm. When the fiber diameter is in the range described above, the hydrophobic biodegradable material can be further uniformly distributed with respect to the cellulose.

In addition, when the hydrophobic biodegradable material is in the form of powdery particles, a volume average particle diameter of the powder is preferably 0.1 µm to 1.0 mm, more preferably 1.0 µm to 800.0 µm, and further preferably 5.0 µm to 500.0 µm. When the volume average particle diameter described above is in the range described above, the hydrophobic biodegradable material can be further uniformly distributed with respect to the cellulose.

In addition, the volume average particle diameter of the particles can be measured by a particle size distribution measurement device using a laser diffraction scattering method as a measurement principle. As the particle size distribution measurement device, for example, a particle size distribution meter (such as "Microtrack UPA" manufactured by Nikkiso Co., Ltd.) using a dynamic light scattering method as a measurement principle may be mentioned.

The hydrophobic biodegradable material may be manufactured such that after kneading is performed, for example, using a kneader, a Banbury mixer, a single screw extruder, a multi-screw extruder, a two-roll mill, a three-roll mill, a continuous kneader, or a continuous two-roll mill, pelletizing is performed by an appropriate method, followed by pulverization. Since the hydrophobic biodegradable material may contain particles and/or fibers having various sizes in some cases, classification may be performed by a known classifier.

A content of the hydrophobic biodegradable material with respect to the total mass of the injection molding material is preferably 2.0 to 60.0 percent by mass, more preferably 3.0 to 40.0 percent by mass, and further preferably 4.0 to 15.0 percent by mass. The content of the hydrophobic biodegradable material in the injection molding material can be adjusted by a mixing amount in the mixing step which will be described later. In addition, the content of the hydrophobic biodegradable material in the injection molding material can be measured by an analysis, such as a thermal mass analysis and, if needed, can be measured using an appropriate pre-treatment method.

### 1.3. Starch

The injection molding material of this embodiment contains a starch. The starch is one component of the molded product manufactured using the injection molding material and not only contributes to the retention of the shape of the molded product but also maintains and improves the characteristics, such as a strength, of the molded product. In the molded product manufactured using the injection molding material, the starch is a component functioning as a binding material to bind the fiberized cellulose fibers to each other.

The starch is a high molecular weight material which is obtained by polymerization of α-glucose molecules with glycosidic bonds interposed therebetween. The starch may have either a linear structure or a branched structure.

As the starch, starches derived from various types of plants may be used. As a raw material of the starch, for example, there may be mentioned grains, such as corn, wheat, or rice; beans, such as broad beans, mung beans, or red beans; tubers and roots, such as potatoes, sweet potatoes, or tapiocas; wild grass, such as dogtooth violet, bracken, or kudzu; or palms such as sago palm.

In addition, as the starch, a processed starch or a modified starch may also be used. As the processed starch, for example, there may be mentioned an acetylated distarch adipate, an acetylated starch, an oxidized starch, a starch sodium octenyl succinate, a hydroxypropyl starch, a hydroxypropyl distarch phosphate, a monostarch phosphate, a phosphated distarch phosphate, an urea phosphorylated esterified starch, a sodium starch glycolate, or a high-amylose cornstarch. In addition, as the modified starch, for example, there may be mentioned an α-modified starch, a dextrin, a lauryl polyglucose, a cationized starch, a thermoplastic starch, or a starch carbamate.

A content of the starch with respect to the total mass of the injection molding material is preferably 2.0 to 70.0 percent by mass, more preferably 3.0 to 65.0 percent by mass, and further preferably 10.0 to 30.0 percent by mass. In addition, the content of the starch can be measured by a component analysis, such as an NMR method and, if needed, can be measured using a pre-treatment method, such as enzymolysis. The content of the starch in the injection molding material may be adjusted by a mixing amount in the mixing step which will be described below.

### 1.4. Mixing Step

The method for manufacturing an injection molding material of this embodiment includes a mixing step of mixing in a gas atmosphere, the fiberized cellulose, the hydrophobic biodegradable material, and the starch.

In this specification, "mixing performed in a gas atmosphere" indicates a mixing to be performed by an air-flow function. A mixing treatment in the mixing step is a method (dry method) in which the cellulose, the hydrophobic biodegradable material, and the starch are introduced in an air flow and are then diffused to each other therein, and the mixing treatment described above is a hydrodynamic mixing treatment. In the mixing step, the cellulose, the hydrophobic biodegradable material, and the starch may be mixed together either simultaneously or sequentially. When the individual materials are sequentially mixed together, the order thereof is also not particularly limited. In addition, in the sequential mixing, the hydrophobic biodegradable material and the starch are preferably mixed with the cellulose since the hydrophobic biodegradable material and the starch are likely to be more uniformly disposed in the aggregate of the cellulose.

In the mixing step, the mixing is not performed using a large amount of water as a medium and is performed in a gas atmosphere, such as in air or nitrogen. That is, the mixing step may be performed either in a perfect dry state without water or in a state in which water vapor or a small amount of liquid water is present.

Although water or water vapor may be intentionally added in the mixing step, in the case described above, the addition described above is preferably performed so that in the following steps, energy and/or time necessary to remove the water as described above by heating or the like is not excessively increased.

The mixing step may be performed using a known apparatus, such as an FM mixer, a Henschel mixer, or a super mixer. In addition, as the apparatus, an apparatus which performs stirring by a high-speed rotating blade may be used, and an apparatus, such as a V type mixer, using the rotation of a container may also be used. Furthermore, a batch type apparatus or a continuous type apparatus may also be used. As one example of the continuous type apparatus, a mixing portion of a manufacturing apparatus which will be described later may be preferably mentioned.

### 1.5. Other Steps

The method for manufacturing an injection molding material may also include, besides the mixing step, a preparing step, a processing step, and the like.

### 1.5.1. Preparing Step

The preparing step is a step of preparing materials to be mixed together before the mixing step. As the preparing step, for example, there may be mentioned a fiberizing step of preparing a fiberized cellulose, a pulverizing step of obtaining a powdered hydrophobic biodegradable material and a powdered starch, and a spinning step of obtaining a fibrous hydrophobic biodegradable material.

### Fiberizing Step

The fiberizing step can be performed by dry defibration of the cellulose raw material or by disaggregation of the cellulose raw material in water. Since the mixing step is performed in a dry atmosphere, the fiberizing step is more preferably performed by the dry defibration. The defibration may be performed, for example, in a defibrating portion of the manufacturing apparatus which will be described later.

### Pulverizing Step

The pulverizing step may be performed by a known method and may also be performed using a known apparatus, such as a jet mill, a hammer mill, or a Nano Jetmizer. Furthermore, a batch type apparatus or a continuous type apparatus may also be used. Spinning Step

The spinning step may be performed by a known method, and for example, melt spinning, dry spinning, or wet spinning may be mentioned. In addition, after threads of the hydrophobic biodegradable material are obtained, the threads thus obtained may be pulverized and cut into a fibrous hydrophobic biodegradable material.

### 1.5.2. Processing Step

After the mixing step, the processing step may be performed, for example, so as to enable the injection molding material to be easily handled. Although the injection molding material is obtained through the mixing step, by further performing the processing step, the injection molding material may be formed into sheets, coarsely pulverized pieces, or pellets. That is, by the processing step described above, an injection molding material in the form of sheets, coarsely pulverized pieces, or pellets can be obtained.

### Forming step

A forming step can be performed, for example, by a forming portion of the manufacturing apparatus which will be described later, and in this case, a sheet-shaped injection molding material may be obtained. Furthermore, if needed, the sheet-shaped injection molding material may be cut by a shredder or the like, and in this case, an injection molding material in the form of shreds may be obtained. In addition, the processing step may also be performed using a known pelletizer, and in this case, an injection molding material in the form of pellets may be obtained.

### 1.6. Injection Molding Material

As described above, the injection molding material of this embodiment contains the fiberized cellulose, the hydrophobic biodegradable material in the form of fibrous and/or powdery particles, and the starch in the form of fibrous particles, and in the aggregate of the fiberized cellulose, the hydrophobic biodegradable material and the starch are uniformly distributed.

In this specification, the term "uniform" indicates that when uniform dispersion or mixing is discussed, in an object in which at least two types or at least two phases of components are defined, an existent position of the one component relative to that of the other component is uniform in the entire system or is substantially the same in each portion of the system. In addition, the "uniform" also includes the case in which distances between all the components are not equal to each other.

As described above, although the injection molding material includes the hydrophobic biodegradable material and the starch together with the fiberized cellulose, the hydrophobic biodegradable material and the starch may bond the fiberized cellulose fibers to each other or may simply adhere thereto.

In addition, besides the cellulose, the hydrophobic biodegradable material, and the starch, the injection molding material may also contain a natural gum glue, such as an etherized tamarind gum, an etherized locust bean gum, an etherized guar gum, or an acacia gum arabic; a cellulose-derived glue, such as an etherized carboxymethyl cellulose or a hydroxyethyl cellulose; a polysaccharide such as a glycogen, a hyaluronic acid, an etherized starch, or an etherized starch; a seaweed, such as a sodium alginate or an agar; an animal protein such as a collagen, a gelatin, or a hydrolyzed collagen; a sizing agent; fiberized cellulose-derived impurities; starch-derived impurities; a hemicellulose; a lignin; and/or a synthetic high molecular weight material, such as a rayon, a lyocell, a cupra, a vinylon, an acrylic resin, a nylon, an aramid, a polyester, a polyethylene, a polypropylene, a polyurethane, a polyimide, a poly(vinyl alcohol), a poly(acrylic acid) or its salt, a polyacrylamide, or a polymethacrylamide. However, in view of environmental compatibility of the injection molding material and its molded product, when at least one of the materials mentioned above is contained, a material having a biodegradable property is preferably used.

However, a content of the components other than the fiberized cellulose, the hydrophobic biodegradable material, and the starch in the injection molding material is preferably 10 percent by mass or less, more preferably 5.0 percent by mass or less, and further preferably 2.0 percent by mass or less.

The injection molding material may either contain or not contain water. A moisture content obtained when the injection molding material is left for 2 hours in an environment at a temperature of 27°C and a relative humidity of 98% is, for example, 10 to 55 percent by mass.

In addition, the moisture content may be measured as described below. For example, after 0.7 g of the injection molding material is sampled and then laminated to form a disc shape on cooking paper using a Raffine Stainless Steel Automatic Powder Sifter M manufactured by Pearl Metal Co., Ltd., the injection molding material together with the cooking paper is placed on a stainless steel-made Pishat Net Basket (manufactured by Shinetsu Works Co., Ltd.) and is left for 2 hours in an environment at a temperature of 27°C and a relative humidity of 98% using a constant-temperature oven (constant temperature and humidity device "Platinous" (registered trademark) K series PL-3KPH, manufactured by Espec Corp.). Subsequently, the moisture content is measured, for example, using a heat-drying type moisture meter (MX-50, manufactured by A&B Company).

### 1.7. Injection Molding

The injection molding material of this embodiment is used for injection molding. The injection molding may be performed using a known injection molding machine. When the hydrophobic biodegradable material is melted, the injection molding material of this embodiment is able to have a suitable fluidity for the injection molding. In addition, in the injection molding, water may be added to the injection molding material, and by this addition, the starch may be softened or may be made to function as a glue. Accordingly, the hydrogen bonds between the cellulose and the starch are likely to be formed. In addition, the hydrogen bonds between the cellulose fibers are also likely to be formed.

When the injection molding is performed using the injection molding material, a moisture amount to be added to the injection molding material is, as the moisture content, approximately 70 percent by mass, preferably 60 percent by mass or less, and more preferably 50 percent by mass or less. In addition, a temperature in the injection molding is preferably 50.0°C to 200.0°C.

### 1.8. Molded Product

A molded product obtained by the injection molding of the injection molding material is a product formed to have a predetermined shape by a predetermined molding die. Accordingly, the molded product as described above is excellent in water resistance and biodegradable property. In addition, this molded product is also excellent in recycle characteristics, mechanical strength, and the like.

The shape of the molded product is not particularly limited, and for example, any shape, such as a sheet shape, a block shape, a spherical shape, or a three-dimensional steric shape, may be formed.

The molded product may be formed partially from the injection molding material described above and may also have a portion which is not formed from the injection molding material. Application of the molded product is also not particularly limited.

### 2. Manufacturing Apparatus of Injection Molding Material

Next, a manufacturing apparatus preferably applied to the method for manufacturing an injection molding material will be described. FIGURE is a schematic side view showing a preferable example of the manufacturing apparatus.

In addition, hereinafter, a top side in FIGURE is called "above" or "upper side", and a bottom side in FIGURE is called "below" or "lower side" in some cases. In addition, FIGURE is a schematic structural view, and a positional relationship between portions of a manufacturing apparatus 100 may be different from an actual positional relationship in some cases. In addition, in FIGURE, a direction in which a cellulose raw material M1, coarsely pulverized pieces M2, a defibrated material M3, a first sorted material M4-1, a second sorted material M4-2, a first web M5, fine segments M6, a mixture M7, a second web M8, and a sheet S are transported, that is, a direction indicated by an arrow, is also called a transport direction. In addition, a front end side and a base end side of the arrow are also called a transport-direction downstream side and a transport-direction upstream side, respectively.

The manufacturing apparatus 100 shown in FIGURE is an apparatus in which the cellulose raw material M1 is coarsely pulverized and defibrated, the hydrophobic biodegradable material and the starch are supplied as additives from an additive supply section 171, the fiberized cellulose, the hydrophobic biodegradable material, and the starch are mixed in a gas atmosphere by a mixing portion 17 and then deposited, and a sheet-shaped molded material is obtained by forming a deposit using a forming portion 20. Although the injection molding material is manufactured when the fine segments M6 pass through the mixing portion 17, according to the manufacturing apparatus 100, a sheet-shaped molded material is formed as the injection molding material.

In the following description, the case in which waste paper is used as the cellulose raw material M1 and in which a molded material to be manufactured is the sheet S which is recycled paper will be mainly described.

The manufacturing apparatus 100 shown in FIGURE includes a sheet supply device 11, a coarsely pulverizing portion 12, a defibrating portion 13, a sorting portion 14, a first web forming portion 15, a segmenting portion 16, the mixing portion 17, a dispersing portion 18, a second web forming portion 19, the forming portion 20, a cutting portion 21, a stock portion 22, a recovery portion 27, and a control portion 28 which controls operations of those mentioned above. The coarsely pulverizing portion 12, the defibrating portion 13, the sorting portion 14, the first web forming portion 15, the segmenting portion 16, the mixing portion 17, the dispersing portion 18, the second web forming portion 19, the forming portion 20, the cutting portion 21, and the stock portion 22 are each a treatment portion to treat the sheet.

In addition, by the sheet supply device 11 and one of the coarsely pulverizing portion 12 and the defibrating portion 13, a sheet treating device 10A is formed. In addition, by the sheet treating device 10A and the second web forming portion 19, a fiber body depositing device 10B is formed.

In addition, the manufacturing apparatus 100 includes a humidifying portion 231, a humidifying portion 232, a humidifying portion 233, a humidifying portion 234, a humidifying portion 235, and a humidifying portion 236. In addition, the manufacturing apparatus 100 also includes a blower 261, a blower 262, and a blower 263.

In addition, since the control portion 28 is electrically coupled to the humidifying portions 231 to 236 and the blowers 261 to 263, the operations thereof are controlled by the control portion 28. That is, in this embodiment, by one control portion 28, the portions of the manufacturing apparatus 100 are configured to be controlled. However, the structure is not limited to that described above, and for example, a control portion to control the operations of the portions of the sheet supply device 11 and a control portion to control the operations of the portions other than those of the sheet supply device 11 may be separately provided.

In addition, in the manufacturing apparatus 100, a raw material supply step, a coarsely pulverizing step, a defibrating step, a sorting step, a first web forming step, a segmenting step, a mixing step, a discharging step, a depositing step, a sheet forming step, and a cutting step are conducted. Among those steps mentioned above, the mixing step corresponds to the mixing step in the method for manufacturing an injection molding material.

Hereinafter, the structure of each portion will be described. The sheet supply device 11 is a device to perform the raw material supply step of supplying the cellulose raw material M1 to the coarsely pulverizing portion 12. As the cellulose raw material M1, a material containing cellulose is used. In addition, as the cellulose raw material M1, a molded product of an injection molding material which contains a fiberized cellulose, a hydrophobic biodegradable material, and a starch, the latter two being adhered to the fiberized cellulose, may also be used.

The coarsely pulverizing portion 12 is a portion to perform the coarsely pulverizing step of coarsely pulverizing the cellulose raw material M1 supplied from the sheet supply device 11 in a gas atmosphere, such as in the air. The coarsely pulverizing portion 12 includes a pair of coarsely pulverizing blades 121 and a chute 122.

Since the pair of coarsely pulverizing blades 121 is rotated in opposite directions, the cellulose raw material M1 is coarsely pulverized therebetween, that is, the coarsely pulverized pieces M2 are obtained by cutting. The shape and the size of the coarsely pulverized piece M2 are preferably suitable for a defibrating treatment in the defibrating portion 13, and for example, small pieces having a one-side length of 100 mm or less is preferable, and small pieces having a one-side length of 10 mm to 70 mm is more preferable.

The chute 122 is disposed at a lower side of the pair of coarsely pulverizing blades 121 and is formed, for example, to have a funnel shape. Accordingly, the chute 122 is able to receive the coarsely pulverized pieces M2 which are coarsely pulverized by the coarsely pulverizing blades 121 and are then allowed to fall.

In addition, at an upper side of the chute 122, the humidifying portion 231 is disposed adjacent to the pair of coarsely pulverizing blades 121. The humidifying portion 231 is a portion to humidify the coarsely pulverized pieces M2 in the chute 122. This humidifying portion 231 is formed of a vaporizing humidifier in which a filter containing moisture is provided, and since air is allowed to pass through the filter, humidified air having a high humidity is supplied to the coarsely pulverized pieces M2. Since the humidified air is supplied to the coarsely pulverized pieces M2, the humidifying step described above can be performed, and the effect as described above can be obtained. In addition, the coarsely pulverized pieces M2 can be suppressed from being adhered to the chute 122 and the like caused by an electrostatic force.

The chute 122 is coupled to the defibrating portion 13 with a tube 241 interposed therebetween. The coarsely pulverized pieces M2 collected in the chute 122 are transported to the defibrating portion 13 after passing through the tube 241.

The defibrating portion 13 is a portion to perform the defibrating step of defibrating the coarsely pulverized pieces M2 in a gas atmosphere, that is, in a dry atmosphere. By the defibrating treatment in this defibrating portion 13, the defibrated material M3 can be formed from the coarsely pulverized pieces M2. In this case, "defibrate" indicates that the coarsely pulverized pieces M2 in which fiberized cellulose fibers are bound to each other are disentangled into independent fibers. In addition, the disentangled fibers as described above collectively form the defibrated material M3. The fibers of the defibrated material M3 each have a linear shape or a belt shape. In addition, the fibers of the defibrated material M3 may also be entangled with each other to form an aggregate, that is, may be present so as to form so-called "damas".

In this embodiment, the defibrating portion 13 is formed, for example, of an impeller mill including a high-speed rotating blade and a liner located at an outer circumference of the rotating blade. The coarsely pulverized pieces M2 flowing into the defibrating portion 13 are defibrated after being sandwiched between the rotating blade and the liner.

In addition, by the rotation of the rotating blade, the defibrating portion 13 is able to generate a flow of air, that is, an air flow, from the coarsely pulverizing portion 12 to the sorting portion 14. Accordingly, the coarsely pulverized pieces M2 can be sucked to the defibrating portion 13 from the tube 241. In addition, after the defibrating treatment, the defibrated material M3 can be supplied to the sorting portion 14 through a tube 242.

At a certain point of the tube 242, the blower 261 is disposed. The blower 261 is an air flow generator to generate an air flow toward the sorting portion 14. Accordingly, the supply of the defibrated materials M3 to the sorting portion 14 is promoted.

The sorting portion 14 is a portion to perform the sorting step of sorting the defibrated material M3 by the lengths of the fiberized cellulose fibers. In the sorting portion 14, the defibrated material M3 is sorted into the first sorted material M4-1 and the second sorted material M4-2 larger than the first sorted material M4-1. The fibers of the first sorted material M4-1 each have a size suitable for a subsequent production of the sheet S. An average length of the fibers of the first sorted material M4-1 is preferably 1 to 30 µm. On the other hand, the second sorted material M4-2 includes, for example, insufficiently defibrated coarsely pulverized pieces and defibrated and fiberized cellulose fibers excessively aggregated together.

The sorting portion 14 includes a drum section 141 and a housing section 142 receiving the drum section 141.

The drum section 141 is formed of a cylindrical net member and is a sieve to be rotated around a central shaft thereof. Into this drum section 141, the defibrated material M3 flows. In addition, when the drum section 141 is rotated, fibers of the defibrated material M3 smaller than openings of the net are sorted as the first sorted material M4-1, and fibers of the defibrated material M3 larger than the openings of the net are sorted as the second sorted material M4-2. The first sorted material M4-1 falls from the drum section 141.

On the other hand, the second sorted material M4-2 is supplied to a tube 243 coupled to the drum section 141. One side of the tube 243 opposite to the drum section 141, that is, an upstream side of the tube 243, is coupled to the tube 241. The second sorted material M4-2 passing through this tube 243 meets the coarsely pulverized pieces M2 in the tube 241 and then flows into the defibrating portion 13 together with the coarsely pulverized pieces M2. Accordingly, the second sorted material M4-2 is returned to the defibrating portion 13 and is again treated by the defibrating treatment together with the coarsely pulverized pieces M2.

In addition, while being dispersed in air, the first sorted material M4-1 falls from the drum section 141 toward the first web forming portion 15 located below the drum section 141. The first web forming portion 15 is a portion to perform the first web forming step of forming the first web M5 from the first sorted material M4-1. The first web forming portion 15 includes a mesh belt 151, three tension rollers 152, and a suction section 153.

The mesh belt 151 is an endless belt, and the first sorted material M4-1 is deposited thereon. This mesh belt 151 is stretched around the three tension rollers 152. In addition, by a rotational drive of the tension rollers 152, the first sorted material M4-1 on the mesh belt 151 is transported downstream.

The fibers of the first sorted material M4-1 have a size larger than openings of the mesh belt 151. Accordingly, the first sorted material M4-1 is not allowed to pass through the mesh belt 151 and, hence, can be deposited on the mesh belt 151. In addition, while being deposited on the mesh belt 151, the first sorted material M4-1 is transported downstream together with the mesh belt 151 and is then formed into a layered first web M5.

In addition, the first sorted material M4-1 may be unfavorably mixed, for example, with dust and the like in some cases. The dust and the like may be generated, for example, by the coarse pulverization and/or the defibration. In addition, the dust and the like as described above can be recovered by the recovery portion 27.

The suction section 153 is a suction mechanism to suck air from a lower side of the mesh belt 151. Accordingly, the dust and the like passing through the mesh belt 151 can be sucked together with air.

In addition, the suction section 153 is coupled to the recovery portion 27 through a tube 244. The dust and the like sucked in the suction section 153 is recovered by the recovery portion 27.

To the recovery portion 27, a tube 245 is further coupled. In addition, at a certain point of the tube 245, the blower 262 is disposed. By the operation of this blower 262, a suction force can be generated in the suction section 153. Accordingly, the formation of the first web M5 on the mesh belt 151 can be promoted. This first web M5 is a web from which the dust and the like are removed. In addition, by the operation of the blower 262, the dust and the like reaches the recovery portion 27 through the tube 244.

The housing section 142 is coupled to the humidifying portion 232. The humidifying portion 232 is formed of a vaporizing humidifier. Accordingly, in the housing section 142, humidified air is supplied. By this humidified air, the humidifying step described above can be performed, and the effect as described above can be obtained. In addition, the first sorted material M4-1 can be humidified, and as a result, the first sorted material M4-1 can also be suppressed from being adhered to an inner wall of the housing section 142 caused by an electrostatic force.

The humidifying portion 235 is disposed downstream of the sorting portion 14. The humidifying portion 235 is formed of an ultrasonic type humidifier which sprays water. Accordingly, moisture can be supplied to the first web M5, and hence, a moisture amount of the first web M5 is adjusted. By this adjustment, the humidifying step can be performed, and the effect as described above can be obtained. In addition, adsorption of the first web M5 to the mesh belt 151 caused by an electrostatic force can be suppressed. Accordingly, the first web M5 can be easily peeled away from the mesh belt 151 at a position at which the mesh belt 151 is folded by the tension roller 152.

The segmenting portion 16 is disposed downstream of the humidifying portion 235. The segmenting portion 16 is a portion to perform the segmenting step of segmenting the first web M5 peeled away from the mesh belt 151. The segmenting portion 16 includes a rotatably supported propeller 161 and a housing section 162 receiving the propeller 161. In addition, by the rotary propeller 161, the first web M 5 can be segmented. The first web M5 thus segmented forms the fine segments M6. In addition, the fine segments M6 fall in the housing section 162.

The housing section 162 is coupled to the humidifying portion 233. The humidifying portion 233 is formed of a vaporizing humidifier. Accordingly, humidified air can be supplied in the housing section 162. By this humidified air, the humidifying step can be performed, and the effect as described above can be obtained. In addition, the fine segments M6 can be suppressed from being adhered to the propeller 161 and an inner wall of the housing section 162 caused by an electrostatic force.

The mixing portion 17 is disposed downstream of the segmenting portion 16. The mixing portion 17 is a portion to perform the mixing step of mixing the fine segments M6 and the additives. This mixing portion 17 includes the additive supply section 171, a tube 172, and a blower 173.

The tube 172 couples the housing section 162 of the segmenting portion 16 to a housing 182 of the dispersing portion 18 and functions as a flow path through which the mixture M7 of the fine segments M6 and the additives passes.

To a certain point of the tube 172, the additive supply section 171 is coupled. The additive supply section 171 includes a housing 170 receiving the additives and a screw feeder 174 provided in the housing 170. By the rotation of the screw feeder 174, the additives in the housing 170 are pushed out of the housing 170 and are supplied in the tube 172. The additives supplied in the tube 172 are mixed with the fine segments M6 to form the mixture M7.

In addition, as the additives to be supplied from the additive supply section 171, for example, there may be mentioned a binding agent which binds the fibers to each other, a colorant which colors the fibers, an aggregation suppressor which suppresses aggregation of the fibers, a flame retardant agent which enables the fibers and the like to hardly burn, a paper strength enhancer which increases a paper force of the sheet S, and/or the defibrated material, and those additives mentioned above may be used alone, or at least two types thereof may be used in combination. Hereinafter, the case in which a mixture P1 of the hydrophobic biodegradable material and the starch is used as the additive will be described.

Since the mixture P1 of the hydrophobic biodegradable material and the starch is supplied from the additive supply section 171, even when a content of the starch in the cellulose raw material M1 is relatively low, or even when a relatively large amount of the starch contained in the cellulose raw material M1 is removed during the treatment performed using the manufacturing apparatus 100, a preferable injection molding material can be obtained. That is, the contents of the hydrophobic biodegradable material and the starch in the injection molding material each can be set in a predetermined range.

The mixture P1 of the hydrophobic biodegradable material and the starch preferably satisfies the conditions similar to those of the hydrophobic biodegradable material and the starch as the constituent elements of the injection molding material described above.

In addition, at a certain point of the tube 172, the blower 173 is disposed downstream of the additive supply section 171. By an operation of a rotary portion, such as a blade, of the blower 173, mixing between the fine segments M6 and the mixture P1 of the hydrophobic biodegradable material and the starch is promoted. In addition, the blower 173 is able to generate an air flow toward the dispersing portion 18. By this air flow, in the tube 172, the fine segments M6 and the mixture P1 of the hydrophobic biodegradable material and the starch can be stirred with each other. The fine segments M6 in the mixture M7 are disentangled while passing through the tube 172 and are formed into finer fibers. Accordingly, in the mixture M7, the fine segments M6 are disentangled, and the mixture P1 of the hydrophobic biodegradable material and the starch is uniformly dispersed. That is, by the treatment performed in the mixing portion 17, the injection molding material is formed so that in the aggregate of the fiberized cellulose, the hydrophobic biodegradable material and the starch are uniformly distributed.

In this embodiment, since the mixture M7 which is the injection molding material is formed into a sheet shape, the mixture M7 is further transported to the dispersing portion 18. In addition, the mixture M7, the second web M8, and the sheet S each correspond to the injection molding material.

In addition, the blower 173 is electrically coupled to the control portion 28, and the operation is controlled thereby. In addition, by adjusting an air volume supplied by the blower 173, an amount of air to be supplied in a drum 181 can be adjusted.

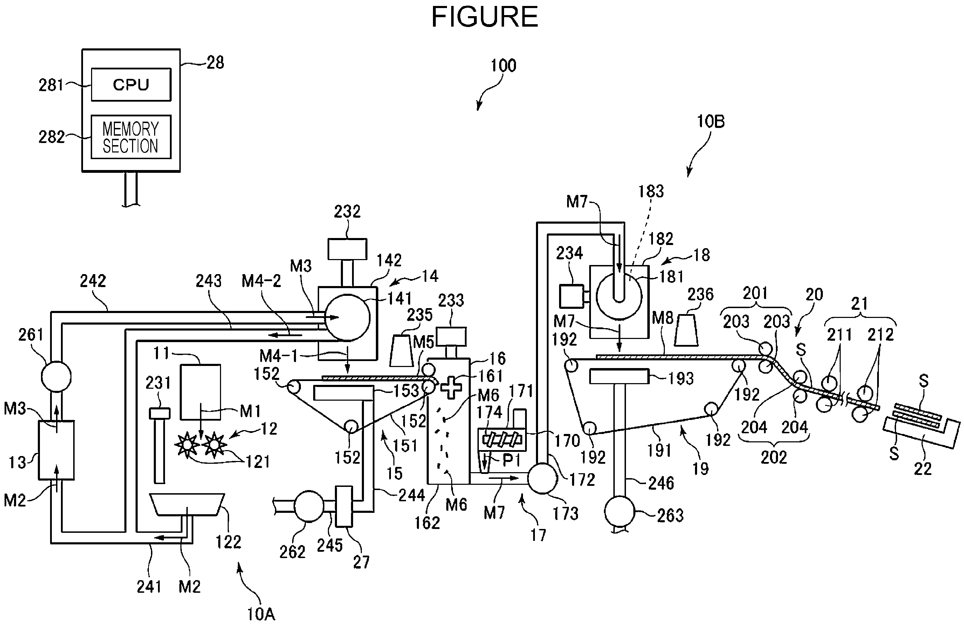

In addition, although not shown in the drawing, the tube 172 is branched into two ways at a drum 181-side end portion, and the branched end portions are coupled to inlet ports (not shown) formed at end surfaces of the drum 181.

The dispersing portion 18 shown in FIGURE is a portion to perform the discharging step in which entangled fibers of the mixture M7 are disentangled and discharged. The dispersing portion 18 includes the drum 181 to introduce and discharge the mixture M7, the housing 182 to receive the drum 181, and a drive power source 183 to rotationally drive the drum 181.

The drum 181 is formed of a cylindrical net member and is a sieve to be rotated around a central shaft thereof. When the drum 181 is rotated, the fibers and the like of the mixture M7 smaller than openings of the net are allowed to pass through the drum 181. In this step, the mixture M7 is further disentangled and then discharged together with air. That is, the drum 181 functions as a discharge section to discharge the material including the fibers.

Although not shown in the drawing, the drive power source 183 includes a motor, a decelerator, and a belt. The motor is electrically coupled to the control portion 28 with a motor driver interposed therebetween. In addition, a rotational force output from the motor is decelerated by the decelerator. The belt is formed, for example, of an endless belt and is stretched around an output shaft of the decelerator and an outermost circumference of the drum. Accordingly, a rotational force of the output shaft of the decelerator is transmitted to the drum 181 with the belt interposed therebetween.

In addition, the housing 182 is coupled to the humidifying portion 234. The humidifying portion 234 is formed of a vaporizing humidifier. Accordingly, humidified air is supplied in the housing 182. By this humidified air, the inside of the housing 182 can be humidified, the humidifying step can be performed, and the effect as described above can be obtained. In addition, the mixture M7 can also be suppressed from being adhered to an inner wall of the housing 182 caused by an electrostatic force.

In addition, while being dispersed in air, the mixture M7 discharged from the drum 181 falls toward the second web forming portion 19 located below the drum 181. The second web forming portion 19 is a portion to perform the depositing step of forming the second web M8 which is a deposit formed by the deposition of the mixture M7. The second web forming portion 19 includes a mesh belt 191, four tension rollers 192, and a suction section 193.

The mesh belt 191 is a mesh member and, according to the structure shown in the drawing, is formed of an endless belt. In addition, on the mesh belt 191, the mixture M7 which is dispersed and discharged by the dispersing portion 18 is deposited. This mesh belt 191 is stretched around the four tension rollers 192. In addition, by a rotational drive of the tension rollers 192, the mixture M7 on the mesh belt 191 is transported downstream.

In addition, in the structure shown in the drawing, although the mesh belt 191 is used as one example of the mesh member, the present disclosure is not limited thereto, and for example, a belt having a flat plate shape may also be used.

In addition, sizes of almost all the fibers and the like of the mixture M7 on the mesh belt 191 are equal to or larger than openings of the mesh belt 191. Accordingly, the mixture M7 is restricted to pass through the mesh belt 191 and hence, can be deposited on the mesh belt 191. In addition, while being deposited on the mesh belt 191, since the mixture M7 is transported downstream together with the mesh belt 191, a layered second web M8 is formed from the mixture M7.

The suction section 193 is a suction mechanism to suck air from a lower side of the mesh belt 191. Accordingly, the mixture M7 can be sucked on the mesh belt 191, and hence the deposition of the mixture M7 on the mesh belt 191 can be promoted.

A tube 246 is coupled to the suction section 193. In addition, at a certain point of this tube 246, the blower 263 is disposed. By the operation of this blower 263, a suction force can be generated in the suction section 193.

The humidifying portion 236 is disposed downstream of the dispersing portion 18. The humidifying portion 236 is formed of an ultrasonic type humidifier similar to that of the humidifying portion 235. Accordingly, moisture can be supplied to the second web M8, and hence, a moisture amount of the second web M8 can be adjusted. By this adjustment, the humidifying step can be performed, and the effect as described above can be obtained. In addition, adsorption of the second web M8 to the mesh belt 191 caused by an electrostatic force can be suppressed. Hence, the second web M8 can be easily peeled away from the mesh belt 191 at a position at which the mesh belt 191 is folded by the tension roller 192.

In addition, although a total moisture amount to be applied by the humidifying portion 231 to the humidifying portion 236 is not particularly limited, a moisture content of the mixture when the humidifying steps are completed, that is, a rate of the mass of moisture contained in the second web M8 with respect to the mass of the second web M8 humidified by the humidifying portion 236, is preferably 15 to 50 percent by mass, more preferably 18 to 45 percent by mass, and further preferably 20 to 40 percent by mass. In addition, if needed, the humidifying portion 234 and the humidifying portion 236 are operated so as to enable the second web M8 and the sheet S each used as the injection molding material to have shapes suitable for the injection molding.

The forming portion 20 is disposed downstream of the second web forming portion 19. The forming portion 20 is a portion to perform the sheet forming step of forming the sheet S from the second web M8 which is the mixture. This forming portion 20 includes a pressurizing section 201 and a heating section 202.

The pressurizing section 201 includes a pair of calendar rollers 203, and between the calendar rollers 203, the second web M8 can be pressurized without heating. Accordingly, the density of the second web M8 can be increased. This second web M8 is transported to the heating section 202. In addition, one of the pair of calendar rollers 203 is a drive roller to be driven by an operation of a motor not shown, and the other is a driven roller.

The heating section 202 includes a pair of heating rollers 204, and while being heated between the heating rollers 204, the second web M8 can be pressurized. Accordingly, the sheet S is formed. This sheet S is transported to the cutting portion 21. In addition, one of the pair of heating rollers 204 is a drive roller to be driven by an operation of a motor not shown, and the other is a driven roller.

The cutting portion 21 is disposed downstream of the forming portion 20. The cutting portion 21 is a portion to perform the cutting step of cutting the sheet S. This cutting portion 21 includes first cutters 211 and second cutters 212.

The first cutters 211 cut the sheet S in a direction intersecting the transport direction of the sheet S and, in particular, in a direction orthogonal thereto.

The second cutters 212 are cutters which cut the sheet S downstream of the first cutters 211 in a direction parallel to the transport direction of the sheet S. This cutting is performed so that the sheet S has a predetermined width by removing the two side ends thereof, that is, unnecessary ends in the width direction of the sheet S, and the ends thereof thus removed by the cutting are each called a so-called "end slice".

By the cutting performed using the first cutters 211 and the second cutters 212, small sheets S each having a desired shape and size can be obtained. In addition, those small sheets S are further transported downstream and then stored in the stock portion 22.

In addition, the forming portion 20 is not limited to the structure in which the small sheets S are formed as described above, and for example, the structure in which, for example, block shapes or spherical shapes are formed as the molded material may also be used. In addition, the forming portion 20 may also include a shredder not shown, and the sheet S may be formed into shreds as the injection molding material.

The individual portions of the manufacturing apparatus 100 described above are each electrically coupled to the control portion 28. In addition, the operations of the portions described above are each controlled by the control portion 28.

The individual portions of the manufacturing apparatus to be used for the manufacturing of the injection molding material each may be replaced by an arbitrary component having a function similar to that described above. In addition, an arbitrary component may also be added to the manufacturing apparatus described above.

In addition, the method for manufacturing an injection molding material may include at least the steps up to the mixing step described above and may use, besides the manufacturing apparatus 100, any manufacturing apparatus.

### 3. Example and Comparative Example

Hereinafter, although the present disclosure will be further described with reference to examples and a comparative example, the present disclosure is not limited to the following examples.

### 3.1. Formation of Evaluation Sample

In each of Examples 1 to 3, an injection molding material was formed by mixing a fiberized cellulose, a starch, and a hydrophobic biodegradable material together in a gas atmosphere so as to obtain the composition shown Table 1, and before injection molding, water in an amount of 50% with respect to the injection molding material was added thereto for the injection molding. In addition, in the comparative example, the components of the composition shown in Table 1 were mixed together in water. In Table 1, a "dry method" is shown in each example in which the mixing was performed in a gas atmosphere, and a "wet method" is shown in the comparative Example in which the mixing was performed in water. In addition, in the comparative example, 500 g of the fiberized cellulose, 250 g of the starch, 250 g of the hydrophobic biodegradable material, and 500 g of water were measured and were then mixed and stirred together for 10 minutes by an FM mixer (manufactured by Nippon Coke & Engineering Co., Ltd.), so that an injection molding material was prepared.

**Table 1:**

| | EXAMPLE 1 | EXAMPLE 2 | EXAMPLE 3 | COMPARATIVE EXAMPLE |
|---|---|---|---|---|
| MANUFACTURING METHOD OF INJECTION MOLDING MATERIAL | DRY METHOD | DRY METHOD | DRY METHOD | WET METHOD |
| FIBERIZED CELLULOSE (PERCENT BY MASS) | 50.0 | 50.0 | 50.0 | 50.0 |
| STARCH (PERCENT BY MASS) | 25.0 | 25.0 | 25.0 | 25.0 |
| HYDROPHOBIC BIODEGRADABLE MATERIAL (PERCENT BY MASS) | 25.0 | 25.0 | 25.0 | 25.0 |
| VOLUME AVERAGE PARTICLE DIAMETER OF POWDERY HYDROPHOBIC BIODEGRADABLE MATERIAL (µm) | 200 | 20 | - | 200 |
| LENGTH OF FIBROUS HYDROPHOBIC BIODEGRADABLE MATERIAL (mm) | - | - | 5 | - |
| UNIFORMITY OF MOLDED PRODUCT | B | A | A | C |
| WATER RESISTANCE OF MOLDED PRODUCT | B | A | A | C |

In addition, the fiberized cellulose in Table 1 was obtained by defibrating a pulp sheet in the defibrating portion of the manufacturing apparatus described in the above embodiment. As the starch, a cornstarch (manufactured by Sanwa Starch Co., Ltd.) was used. In addition, as the hydrophobic biodegradable material, in Example 1 and the comparative example, a coarsely pulverized product of decolourised shellac (manufactured by Gifu Shellac Manufacturing Co., Ltd., coarsely pulverized by a high-speed mill and then processed by a 70-mesh sieving treatment) was used; in Example 2, a fine powder processed product of decolourised shellac (manufactured by Gifu Shellac Manufacturing Co., Ltd., processed by a jet mill treatment) was used; and in Example 3, poly(lactic acid) short fibers (manufactured by Unitika Ltd.) were used. 3.2. Evaluation Method

### 3.2.1. Formation of Molded Product

By using a small injection molding machine manufactured by Nissei Plastic Industrial Co., Ltd., a molded product having a hollow truncated corn shape was formed using the injection molding material of each example. A bottom surface diameter, a top surface diameter, a height, and a thickness of the molded product were set to 12 cm, 2 cm, 3 cm, and 2 mm, respectively. As a molding temperature, a heating barrel temperature and a molding die temperature were set to 70°C to 100°C and 160°C, respectively.

### 3.2.2. Evaluation of Uniformity of Molded Product

After the surface of the molded product was observed by visual inspection, the cases in which the numbers of irregularities each having a diameter of 1 mm or more were 4 or less, 5 to 9, and 10 or more were evaluated as "A", "B", and "C", respectively, and the evaluation results are shown in Table 1.

### 3.2.3. Evaluation of Water Resistance of Molded Product

After the molded product of each example was immersed in water for 5 minutes and then recovered therefrom, 100 g of a metal-made weight (stainless steel plate having a bottom surface area of 50 cm²) was placed on the top surface of the molded product and was then left at room temperature for one hour. Subsequently, after the weight was removed, the height of the top surface of the molded product was measured. When rates of the change of the height of the molded product after the weight loading with respect to the initial height (3 cm) of the molded product were less than 10%, 10% to less than 20%, and 20% or more, those rates were evaluated as "A", "B", and "C", respectively, and the evaluation results are shown in Table 1. 3.3. Evaluation Result

The injection molding material of each example manufactured by mixing the fiberized cellulose, the hydrophobic biodegradable material, and the starch in a gas atmosphere was an injection molding material in which the hydrophobic biodegradable material and the starch were uniformly dispersed with respect to the cellulose. In addition, the water resistance of the molded product obtained by the injection molding thereof was excellent.

On the other hand, the molded product of the comparative example formed by the injection molding of the material prepared by the mixing in water had many irregularities on its surface. The reason for this is believed that since the material of the comparative example was prepared by the mixing in water, the hydrophobic biodegradable material was aggregated. In addition, the water resistance was also inferior, and this is also believed to be caused by the aggregation of the hydrophobic biodegradable material.

The present disclosure includes substantially the same structure as the structure described in the embodiment. That is, the substantially the same structure includes, for example, the structure in which the function, the method, and the result are the same as those described above, or the structure in which the object and the effect are the same as those described above. In addition, the present disclosure includes the structure in which a nonessential portion of the structure described in the embodiment is replaced with something else. In addition, the present disclosure includes the structure which performs the same operational effect as that of the structure described in the embodiment or the structure which is able to achieve the same object as that of the structure described in the embodiment. In addition, the present disclosure includes the structure in which a known technique is added to the structure described in the embodiment.

From the embodiments and the modified examples described above, the following conclusions are obtained.

A method for manufacturing an injection molding material, comprises: a mixing step of mixing in a gas atmosphere, a fiberized cellulose; a hydrophobic biodegradable material; and a starch.

According to the manufacturing method described above, an injection molding material in which the hydrophobic biodegradable material and the starch are uniformly dispersed with respect to the cellulose can be obtained. In addition, when a small amount of water is added to the injection molding material thus obtained, a molded product having a preferable water resistance can be formed therefrom.

In the manufacturing method described above, the hydrophobic biodegradable material may contain at least one selected from the group consisting of a PLA, a PHB, a PCL, a PBS, a PHBH, a PBAC, a PBAT, a plant-derived PBS, a cellulose acetate, a shellac, a rosin, a carnauba wax, a sugarcane wax, and a konjac powder.

According to the manufacturing method described above, an injection molding material which is more suitable for injection molding application and which can form a molded product having a more preferable strength can be manufactured.

In the manufacturing method described above, the hydrophobic biodegradable material may be in the form of fibrous and/or powdery particles.

According to the manufacturing method described above, the hydrophobic biodegradable material can be further uniformly distributed with respect to the cellulose, and hence, an injection molding material more suitable for the injection molding can be manufactured.

In the manufacturing method described above, the hydrophobic biodegradable material may be in the form of fibrous particles having a fiber diameter of 0.1 µm to 500.0 µm.

In the manufacturing method described above, the hydrophobic biodegradable material may be in the form of powdery particles having a volume average particle diameter of 0.1 µm to 1.0 mm.

An injection molding material comprises: a fiberized cellulose; a hydrophobic biodegradable material in the form of fibrous and/or powdery particles; and a starch in the form of powdery particles, and in an aggregate of the fiberized cellulose, the hydrophobic biodegradable material and the starch are uniformly distributed.

According to the injection molding material described above, by addition of a small amount of water thereto, a molded product having a preferable water resistance can be formed.

## Claims

1. A method for manufacturing an injection molding material, the method comprising:
a mixing step of mixing in a gas atmosphere,
a fiberized cellulose;
a hydrophobic biodegradable material; and
a starch.

2. The method for manufacturing an injection molding material, according to claim 1,
wherein the hydrophobic biodegradable material is selected from the group consisting of a PLA, a PHB, a PCL, a PBS, a PHBH, a PBAC, a PBAT, a plant-derived PBS, a cellulose acetate, a shellac, a rosin, a carnauba wax, a sugarcane wax, and a konjac powder.

3. The method for manufacturing an injection molding material, according to claim 1,
wherein the hydrophobic biodegradable material is in the form of fibrous and/or powdery particles.

4. The method for manufacturing an injection molding material, according to claim 1,
wherein the hydrophobic biodegradable material is in the form of fibrous particles having a fiber diameter of 0.1 µm to 500.0 µm.

5. The method for manufacturing an injection molding material, according to claim 1,
wherein the hydrophobic biodegradable material is in the form of powdery particles having a volume average particle diameter of 0.1 µm to 1.0 mm.

6. An injection molding material comprising:
a fiberized cellulose;
a hydrophobic biodegradable material in the form of fibrous and/or powdery particles; and
a starch in the form of powdery particles,
wherein in an aggregate of the fiberized cellulose, the hydrophobic biodegradable material and the starch are uniformly distributed.
